# EUROPEAN PATENT SPECIFICATION

(11) **EP 1 147 006 B1**
(45) Date of publication and mention of the grant of the patent: **06.08.2003**
(21) Application number: 99956243.2
(22) Date of filing: 29.11.1999
(51) Int. Cl.: B29C 73/26, B29C 73/32

(54) **METHOD OF TREATING FIBER-REINFORCED PLASTIC ARTICLES**
VERFAHREN ZUR BEHANDLUNG VON FASERVERSTÄRKTEN KUNSTSTOFFGEGENSTÄNDEN
PROCEDE DE TRAITEMENT D'ARTICLES EN PLASTIQUE RENFORCE

(30) Priority: 29.01.1999 GB 9901860
(43) Date of publication of application: 24.10.2001
(73) Proprietor: Davey, Terence James, Felixstowe, Suffolk IP11 9RR (GB)
(72) Inventor: Davey, Terence James, Felixstowe, Suffolk IP11 9RR (GB)
(74) Representative: Copp, David Christopher
(86) International application number: GB9903966
(87) International publication number: WO00044552

(56) References cited:
- FR-A- 2 693 147
- US-A- 3 837 965
- US-A- 5 236 646
- US-A- 5 622 661

## Description

This invention relates to a method of and apparatus for treating products which are made of materials which are applied to a surface (which may be a mould surface which is subsequently removed) in a liquid form and thereafter have to dry or cure before the product is ready for use. Such materials will usually have a heterogenous structure. Examples of such products are those made from fibre reinforced plastics and plastered building walls, but the invention can have much wider application.

The invention is particularly suited for treating glass fibre boat hulls, but is not limited to this particular application. For convenience, the invention will largely be described with reference to its application to boat hulls but this is not to be taken as limiting the application of the invention, and those skilled in the art will be able to adapt the teaching here for use in connection with other products or structures.

Fibre reinforced plastics (FRP) boat hulls conventionally have a smooth outer gelcoat layer and a structural layer made up of fibres (usually glass fibres) embedded in a resin (most usually polyester resin). In some cases a foam or timber core is encapsulated between two reinforced fibre layers. The gelcoat and resin are initially liquids which are mixed with a hardener (catalyst) and applied within a mould in liquid state. After application, the liquids cure to the solid state.

After prolonged exposure in a marine environment, a number of boat hulls are found to suffer blistering which appears on the outer gelcoat surface. It appears that this is caused by a build up of fluid between the gelcoat layer and the fibre/resin layer. The damage can result from one or more of the following: water penetration; degradation reactions resulting from water penetration; deterioration resulting from faulty manufacture; deterioration resulting from faulty materials used in the moulding process; deterioration resulting from failed bonding or de-lamination of foam or timber cores; de-lamination of the moulding. The symptoms of such damage are often attributed to "osmosis" but there is some doubt as to whether any or all of this damage is actually caused by an osmotic reaction.

Conventional treatment is to remove the affected gelcoat to expose the underlying fibre/resin lay-up, to thoroughly : dry the exposed fibre/resin lay-up and then when drying is complete to reinstate the gelcoat, possibly with the addition of different resins to provide a better moisture barrier.

This treatment is sometimes, but by no means always, successful. It does however take a considerable amount of time because the resin/fibre lay-up can only be dried slowly, usually by allowing it to stand in the open.

It is known from US 3,837,965 to repair structural damage to eg the skin of an aircraft by applying a patch over the skin at the area to be repaired and then placing a flexible, heated diaphragm over the area where the patch has been applied. Vacuum is created between the diaphragm and the skin which causes the diaphragm to press against the aircraft skin and to apply pressure to the patch to force it against the skin.

According to the present invention, there is provided a method and apparatus of treating a product moulded according to independent claims 1 and 12.

The heating is preferably applied from a heat source within the space, but may also be applied from an external heat source, provided there is a thermally conducting path into the space, eg through a thermally conductive impermeable sheet material. In any case, some heat loss through the sheet material is desirable as this helps to maintain an even heat distribution within the space.

Preferably the sheet material has an area of up to 1 m², and can be of any convenient shape. The material is preferably secured to a part only of the product surface, and the entire product surface is preferably treated in a batch-wise manner by treating all the parts of the surface sequentially, or by securing a plurality of sheets simultaneously to different parts of the surface. Using a piece or pieces of sheet material of this size allows a boat hull to be treated section-by-section

The method will generally be carried out after the affected gelcoat, and any physically damaged material has been removed from the surface.

To maintain the space between the sheet and the surface, a permeable, substantially non-compressible spacer layer is preferably positioned between the sheet and the surface.

Extraction of the gaseous contents to form a vacuum (this term includes a partial vacuum) behind the sheet will pull the sheet against the spacer layer and (around the sheet edges) against the surface of the product to be treated to enclose a space adjacent the surface. It may be useful to initially secure the sheet to the surface by adhesive mastic or tape around the edges of the sheet to hold the sheet in place until the vacuum is applied. If there are any leaks around the edge of the sheet preventing the maintenance of a suitable vacuum, adhesive tape or some other form of sealant may be applied around the edges.

The edges of the sheet may be of a soft, impermeable material which will be drawn against the surface when a vacuum is applied to form a seal without the need for any additional tape or sealant, or may have such a material sealed to the sheet edges.

A vacuum pump can be connected to the space to provide the extraction facility.

Tests have shown that the damage to the hull or other product does not only result from water penetration through the gelcoat, but also from unreacted chemicals in the gelcoat and in the fibre/resin layers. In some cases the resin is not completely cured at the time of manufacture, leading to the presence of reactive, but unreacted, chemicals in the structure.

By heating the laminate from the surface at the same time as drawing off any vapour or moisture from the surface, it is possible to ensure that any unreacted chemicals complete their reaction so that they become stable, at the same time as producing the necessary drying of the moulding. Once the drying is completed in this way, the removed gelcoat can be replaced with fresh gelcoat and the hull can be finished to complete the repair.

It is preferred to produce a vacuum in the space to a level of about 2 - 5 mb Abs, before beginning to apply heat within the space.

It is preferred to heat the surface within the space to a temperature which is just below the temperature at which the moulding will be damaged by excess heat. In the case of polyester resins, the surface may be heated to a temperature between 80°C and 90°C which is a temperature at which the surface will not be at risk from damage caused by the elevated temperature. The elevated temperature however is effective in producing post-cure of any unreacted chemicals in the laminate. Higher temperatures may be used when the damage/deterioration is severe.

By continuously applying a very low pressure (high vacuum) to the space, vapour or gas is drawn off as soon as it becomes free at the surface, and also any gaseous reaction products are drawn off so that reactions take place quickly and thoroughly.

The invention also provides apparatus for treating a product moulded from fibre reinforced plastics, the apparatus comprising an impermeable sheet, means for securing the sheet to a surface of the product to be treated to enclose a space between the surface and the sheet, means for holding the sheet spaced from the surface to allow gas and vapour to be extracted from any area of the surface beneath the sheet, heating means for applying heat within the space and means for continuously extracting the gaseous contents of the space.

The means for spacing the sheet from the surface ensures that a space is maintained between the sheet and the surface, even when vacuum is applied. The spacing means may also space the heating means from the surface.

The means for extracting the gaseous contents of the space is preferably a vacuum pump capable of working down to pressures of 5 to 2 mb Abs.

The heating means preferably includes a thermostat and a controller so that a constant temperature can be maintained within the space. The sheet may include thermal insulating material.

A treatment duration of about 1-2 hours may be sufficient to dry out an area of laminate about 0.5 m² .

The apparatus may include sheets of differing sizes and differing shapes, so that the method can be carried out on product areas of various shapes.

The invention will now be further described, by way of example, with reference to the accompanying drawings, in which:
- Figure 1: shows a boat hull being treated by a method in accordance with the invention;
- Figures 2, 3, 4 and 5: show impermeable sheets of various different shapes;
- Figure 6: is a cross section through one form of apparatus in accordance with the invention;
- Figure 7: is a cross section through a second form of apparatus in accordance with the invention; and
- Figures 8a and 8b: show details of an edge of the apparatus before and after application of vacuum.

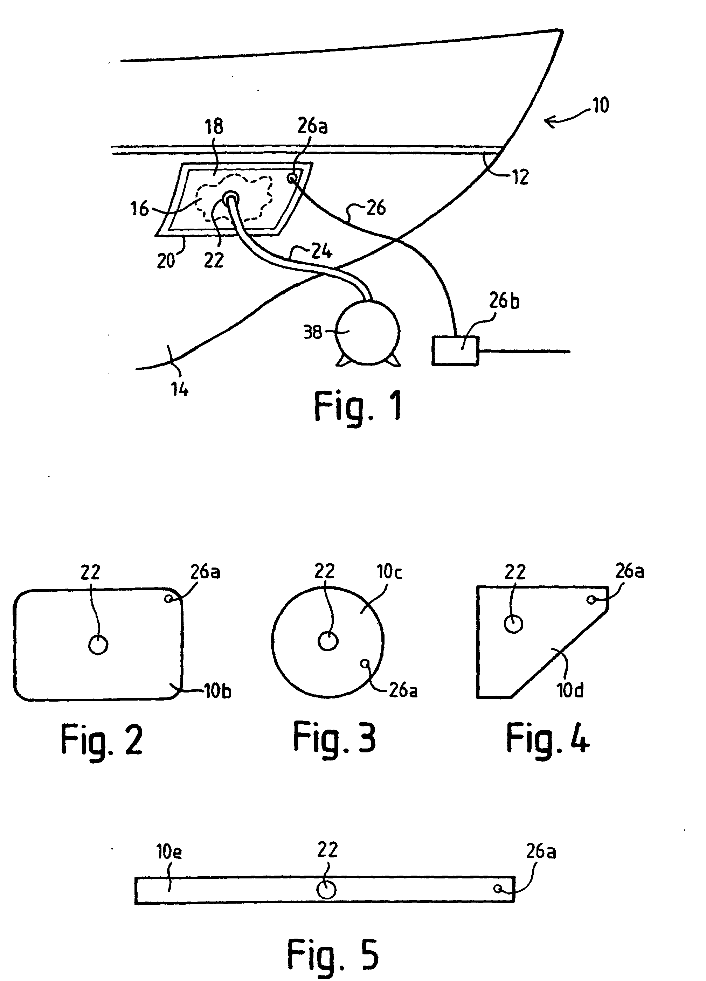

Figure 1 shows a yacht hull 10 with a water line 12 and a keel 14. A damaged area of the hull is shown in dotted lines at 16, and this area has been covered by an impervious sheet or mat 18 which is secured to the hull 10 all the way round by adhesive tape 20, or by a suitable mastic. Alternatively the sheet may have an edge of a material which will automatically form a seal when pulled against the surface by a vacuum. Thus the space between the hull and the sheet 18 is enclosed. A suitable material for the sheet is a silicone rubber.

Connected to the centre of the sheet 18 is an outlet 22 for a vacuum hose 24. Also connected to the sheet 18 is an electrical lead 26 which leads from a power supply 26b through a connection 26a to a heating element attached to the surface of the sheet 18 which will face the hull.

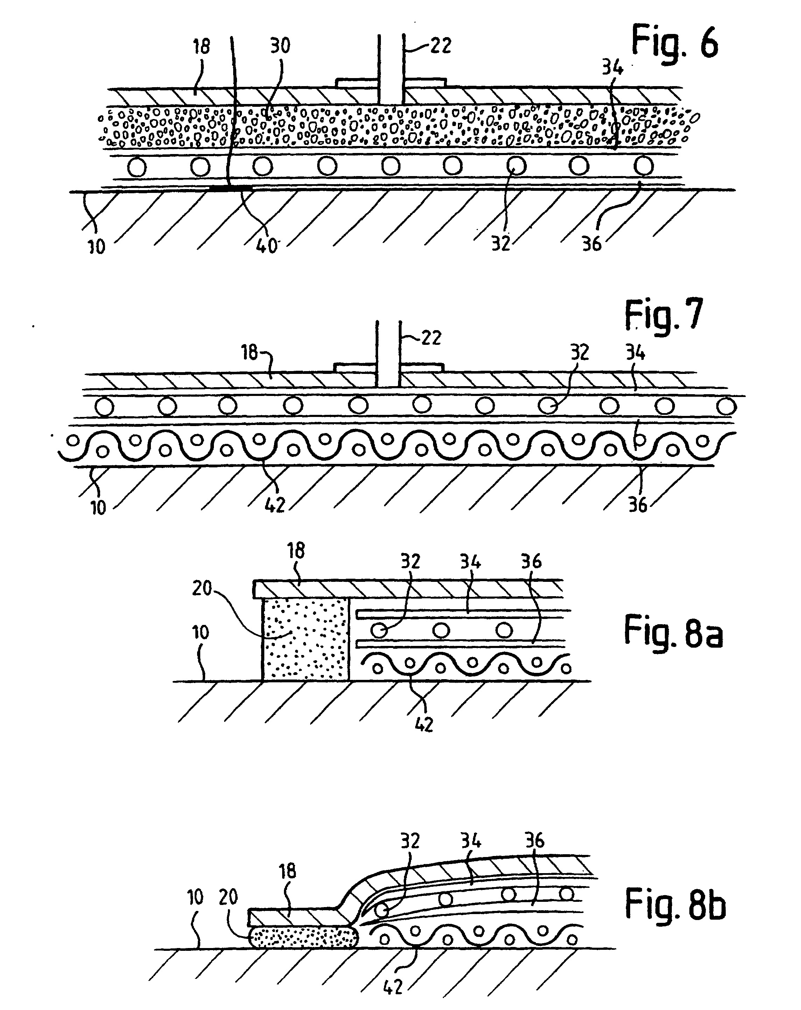

Figure 6 shows a cross section through the area covered by the sheet 18. A layer of permeable insulating material 30 (for example a non-woven permeable polyester blanket) is provided immediately underneath the sheet 18, and a heating element 32 is sandwiched between two heat resisting permeable layers 34, 36. The heating element 32 is connected to the electrical supply 26. In use, when suction is applied through the outlet 22, air and any other gaseous elements contained within the space beneath the sheet 18 will be sucked out. This will tend to pull the sheet 18 against the surface of the hull 10, but a spacing will still be maintained because of the presence of the permeable spacer 30, and because the heating element 32 itself is substantially incompressible and occupies space. As a result, the pump 38 will be able to draw off gas from the whole of the space beneath the sheet 18, and thus from all parts of the surface of the hull 10 which are exposed within the space.

Other parts of the hull can be treated at the same time by securing other sheets as described to the appropriate hull parts. One vacuum pump may serve to simultaneously evacuate several areas under treatment.

The heating element 32 is sandwiched between the layers 34 and 36, partly to protect the heating element itself and partly to avoid scorching the surface of the hull 10. However it is possible for the heating element to be in direct contact with the hull if the temperature of the heating element and the surface of the hull are compatible. The element 32 can be sewn to one or the other of the layers 34,36.

A thermostat 40 can be fitted in a position where it will be in contact with the hull surface 10 so that the hull temperature can be monitored.

The arrangement shown in Figure 6 provides a very flexible device which can follow complex hull contours. Figure 7 shows a somewhat less flexible alternative. In this alternative, instead of the permeable insulating spacer 30, a wire mesh spacer 42 is used, and in this case the spacer 42 lies against the hull surface and the heating element is fitted between the sheet 18 and the spacer. The wire mesh spacer 42 has flexibility, but less than that of the insulating sheet type spacer 30 of Figure 6.

As the hulls of boats are irregular shapes, and parts of the hull, for example close to the bow, may need to be treated, it may be useful to have sheets of different shapes.

Figure 2 shows a simple rectangular sheet 10b with rounded corners; Figure 3 a round sheet 10c; Figure 4 a triangular sheet 10d and Figure 5 a long narrow sheet 10e. The sheet of Figure 5 can be used for example to treat areas of a hull between chines. The rounded corners of Figure 2 allow a single strip of mastic to be easily placed all the way around the edges of the sheet, thus avoiding air gaps. The other sheet shapes can also have rounded corners.

In use, a strip of adhesive mastic tape 20 (Figure 8a) is stuck to the edges of the sheet 18, and the sheet is secured to the damaged area of the hull (after removal of the damaged gelcoat) by this tape. A high vacuum is applied to the surface of the hull through the conforming flexible enclosure which has an underlying permeable spacer. The edges of the sheet are pulled down against the hull with the result that the tape 20 is compressed, as can be seen in Figure 8b. However the presence of the spacer 30, 42 ensures that there is always communication between the outlet 22 and all parts of the hull surface beneath the sheet. Heat is then slowly applied to raise the laminate to that temperature where the contaminants made volatile by the low pressure are drawn off.

The heater is equipped with a controller which maintains a steady temperature at which the moulding is likely to be completely cured or stabilised. The heat output is controlled to remain safely below the temperature at which the laminate would be damaged or affected by a serious loss of structural strength.

The temperature at which the laminate is maintained varies with the materials of the moulding. For example, a typical glass fibre reinforced polyester moulding would be maintained at a temperature between 82°C and 90°C.

After completion of treatment, the heater is switched off, the vacuum is released and the sheet is removed by peeling it away from the surface. The mastic tape 20 is removed and discarded. Before the sheet is applied to a new area of the surface, a fresh layer of tape is applied around the sheet edge.

The method and apparatus allows large mouldings to be effectively treated by means of moderately sized, easily handled enclosures. Although the technique has been particularly developed for use on boat hulls, it can also be used on other mouldings, for example fixed mouldings used in architecture, tanks or containments.

It has been found that glassfibre structures, treated in this way, experience some change in mechanical properties. It has surprisingly been found that treated structures have a greater stiffness in bending after treatment than before, while a small decrease in tensile strength has been noted. For boat hulls, stiffness in bending is important as this reduces flexing of the hull in a seaway.

The vacuum at which the system is effective depends upon the defects in the moulding. However the method is more efficient as the vacuum increases. Typical vacuum levels are close to 2.0 Mb absolute.

The combination of heat and vacuum, applied as described here will be sufficient to stabilise the deteriorating fibre/resin structure and allow restoration to its original condition. Thus, whether the problem is simply water penetration, or a more chemically complex problem, a solution can still be achieved.

## Claims

1. A method of treating a product which is made of a material which has or materials which have been applied to a surface in a liquid form and thereafter have dried or cured to make the product ready for use, wherein the edges of a sheet (18) of impermeable sheet material are secured to a surface (10) of the product to be treated to enclose a space between the surface and the sheet, heating is applied within the space, **characterised in that** the gaseous contents of the space are continuously extracted while the sheet is held spaced from the surface to allow gas and vapour to be extracted from any area of the surface beneath the sheet (18).

2. A method as claimed in Claim 1, wherein the impermeable sheet material (18) is secured to the surface (10) by adhesive tape (20) around the edges of the material, so that a space is provided between the impermeable sheet material and the surface.

3. A method as claimed in Claim 1 or Claim 2, wherein the impermeable sheet material (18) has edges which are capable of forming an air tight seal when pulled against the surface (10) by a vacuum.

4. A method as claimed in any preceding claim, wherein a vacuum pump (38) is connected to the space to provide the extraction facility.

5. A method as claimed in any preceding claim, wherein a vacuum is produced in the space before beginning to apply heat within the space.

6. A method as claimed in any preceding claim, wherein a vacuum at a level of about 2 - 5 mb Abs is produced and maintained in the space.

7. A method as claimed in any preceding claim, wherein the product is a glassfibre moulding made with a polyester resin and the surface (10) within the space is heated to a temperature of between 80°C and 90°C.

8. A method as claimed in any preceding claim, wherein the product is a glassfibre moulding with an outer gelcoat and wherein the sheet material (18) is secured to the surface (10) after affected gelcoat, and any physically damaged material has been removed from the surface (10).

9. A method as claimed in Claim 8, wherein the treatment is completed by replacing removed gelcoat with fresh gelcoat.

10. A method as claimed in any preceding claim, wherein the product is moulded from fibre reinforced plastics.

11. A method as claimed in any preceding claim, wherein the product is a boat hull (10) moulded from fibre reinforced plastics.

12. Apparatus for treating a product made of a material which has or materials which have been applied to a surface in a liquid form and thereafter have dried or cured to make the product ready for use, the apparatus comprising an impermeable sheet (18), means (20) for securing the sheet to a surface (10) of the product to be treated to enclose a space between the surface and the sheet, heating means (32) for applying heat within the space and means (38) for continuously extracting the gaseous contents of the space, **characterised in that** means (30,42) are provided for holding the sheet (18) spaced from the surface to allow gas and vapour to be extracted from any area of the surface beneath the sheet.

13. Apparatus as claimed in Claim 12, wherein the means for extracting the gaseous contents of the space is a vacuum pump (38) capable of working down to pressures of 5 to 2 mb Abs.

14. Apparatus as claimed in Claim 12 or Claim 13, wherein the heating means (32) includes a thermostat and a controller so that a constant temperature can be maintained within the space.

15. Apparatus as claimed in any one of Claims 12 to 14, wherein the sheet (18) has thermal insulation properties.

16. Apparatus as claimed in any one of Claims 12 to 15, including sheets (10b, 10c, 10d, 10e) of differing sizes and differing shapes, so that the method can be carried out on product areas of various shapes.

17. Apparatus as claimed in any one of Claims 12 to 16, wherein the edges of the sheet (18) are of a material which will form an air-tight seal against the surface when pulled against the surface by a vacuum.

## Patentansprüche

1. Verfahren zur Behandlung eines Produkts, das aus einem Material oder Materialien hergestellt ist, das/die in flüssiger Form auf eine Oberfläche aufgebracht worden sind und danach getrocknet oder ausgehärtet sind, um das Produkt gebrauchsfertig zu machen, bei welchem die Ränder einer Folie (18) aus undurchlässigem Folienmaterial an einer Oberfläche (10) des zu behandelnden Produkts befestigt werden, um einen Zwischenraum zwischen der Oberfläche und der Folie zu umschließen, sowie der Zwischenraum aufgeheizt wird,
**dadurch gekennzeichnet, dass**
der gasförmige Inhalt des Zwischenraums kontinuierlich abgezogen wird, während die Folie im Abstand zu der Oberfläche gehalten wird, um zu ermöglichen, Gas und Dampf aus jedem Bereich der Oberfläche unterhalb der Folie (18) abzuziehen.

2. Verfahren nach Anspruch 1, bei welchem das undurchlässige Folienmaterial (18) mittels Klebeband (20) um die Materialränder herum derart an der Oberfläche (10) befestigt wird, dass ein Zwischenraum zwischen dem undurchlässigen Folienmaterial und der Oberfläche bereitgestellt wird.

3. Verfahren nach Anspruch 1 oder Anspruch 2, bei welchem das undurchlässige Folienmaterial (18) Ränder aufweist, die eine luftdichte Abdichtung bilden können, wenn sie durch ein Vakuum an die Oberfläche (10) gezogen werden.

4. Verfahren nach einem der vorhergehenden Ansprüche, bei welchem eine Vakuumpumpe (38) mit dem Zwischenraum verbunden wird, um die Abzieheinrichtung bereitzustellen.

5. Verfahren nach einem der vorhergehenden Ansprüche, bei welchem ein Vakuum in dem Zwischenraum erzeugt wird, bevor begonnen wird, den Zwischenraum aufzuheizen.

6. Verfahren nach einem der vorhergehenden Ansprüche, bei welchem ein Vakuum in einer Höhe von etwa 2 - 5 mbar Absolutdruck in dem Zwischenraum erzeugt und aufrechterhalten wird.

7. Verfahren nach einem der vorhergehenden Ansprüche, bei welchem das Produkt ein Glasfaser-Formteil ist, das mit einem Polyesterharz hergestellt ist und bei welchem die Oberfläche (10) in dem Zwischenraum auf eine Temperatur zwischen 80° C und 90° C erwärmt wird.

8. Verfahren nach einem der vorhergehenden Ansprüche, bei welchem das Produkt ein Glasfaser-Formteil mit einer äußeren Gelschicht ist und bei welchem das Folienmaterial (18) an der Oberfläche (10) befestigt wird, nachdem die betroffene Gelschicht und etwaiges mechanisch beschädigtes Material von der Oberfläche (10) entfernt worden sind.

9. Verfahren nach Anspruch 8, bei welchem die Behandlung beendet wird, indem die entfernte Gelschicht durch eine frische Gelschicht ersetzt wird.

10. Verfahren nach einem der vorhergehenden Ansprüche, bei welchem das Produkt aus faserverstärkten Kunststoffen geformt ist.

11. Verfahren nach einem der vorhergehenden Ansprüche, bei welchem das Produkt ein Bootskörper (10) ist, der aus faserverstärkten Kunststoffen geformt ist.

12. Vorrichtung zur Behandlung eines Produkts, das aus einem Material oder Materialien hergestellt ist, das/die in flüssiger Form auf eine Oberfläche aufgebracht worden sind und danach getrocknet oder ausgehärtet sind, um das Produkt gebrauchsfertig zu machen, wobei die Vorrichtung umfasst:
eine Folie (18), Mittel (20) zum Befestigen der Folie an einer Oberfläche (10) des zu behandelnden Produkts, um einen Zwischenraum zwischen der Oberfläche und der Folie zu umschließen, eine Aufheizeinrichtung (32), um den Zwischenraum aufzuheizen, sowie eine Einrichtung (38) zum kontinuierlichen Abziehen des gasförmigen Inhalts des Zwischenraums,
**dadurch gekennzeichnet, dass**
Mittel (30, 42) vorgesehen sind, um die Folie (18) im Abstand zu der Oberfläche zu halten, um zu ermöglichen, Gas und Dampf aus jedem Bereich der Oberfläche unterhalb der Folie abzuziehen.

13. Vorrichtung nach Anspruch 12, bei welcher das Mittel zum Abziehen des gasförmigen Inhalts des Zwischenraums eine Vakuumpumpe (38) ist, die bis zu Drücken von 5 bis 2 mbar Absolutdruck hinunter arbeiten kann.

14. Vorrichtung nach Anspruch 12 oder Anspruch 13, bei welcher die Aufheizeinrichtung (32) einen Thermostaten und eine Steuerung beinhaltet, sodass in dem Zwischenraum eine konstante Temperatur aufrechterhalten werden kann.

15. Vorrichtung nach einem der Ansprüche 12 bis 14, bei welcher die Folie (18) wärmeisolierende Eigenschaften aufweist.

16. Vorrichtung nach einem der Ansprüche 12 bis 15, welche Folien (10b, 10c, 10d, 10e) mit unterschiedlichen Größen und unterschiedlichen Formen beinhaltet, sodass das Verfahren an Produktbereichen verschiedener Gestalt ausgeführt werden kann.

17. Vorrichtung nach einem der Ansprüche 12 bis 16, bei welcher die Ränder der Folie (18) aus einem Material bestehen, das eine luftdichte Abdichtung an der Oberfläche bildet, wenn es durch ein Vakuum an die Oberfläche gezogen wird.

## Revendications

1. Procédé de traitement d'un produit qui est fait d'un matériau qui a été appliqué ou de matériaux qui ont été appliqués sur une surface sous une forme liquide, et par la suite ont séché ou durci pour rendre le produit prêt à l'emploi, dans lequel les bords d'une feuille (18) de matériau en feuille imperméable sont attachés à une surface (10) du produit à traiter pour enfermer un espace entre la surface et la feuille, un chauffage est appliqué à l'intérieur de l'espace, **caractérisé en ce que** le contenu gazeux de l'espace est continuellement extrait tandis que la feuille est maintenue à distance de la surface pour permettre le gaz et la vapeur d'être extraits de toutes les zones de la surface sous la feuille (18).

2. Procédé selon la revendication 1, dans lequel le matériau en feuille imperméable (18) est attaché à la surface (10) par du ruban adhésif (20) autour des bords du matériau, de telle sorte qu'un espace est ménagé entre le matériau en feuille imperméable et la surface.

3. Procédé selon la revendication 1 ou la revendication 2, dans lequel le matériau en feuille imperméable (18) a des bords qui sont capables de former un joint étanche ajusté à l'air lorsqu'ils sont attirés contre la surface (10) par un vide.

4. Procédé selon l'une quelconque des revendications précédentes, dans lequel une pompe à vide (38) est reliée à l'espace pour fournir le moyen d'extraction.

5. Procédé selon l'une quelconque des revendications précédentes, dans lequel un vide est produit dans l'espace avant de commencer à appliquer de la chaleur à l'intérieur de l'espace.

6. Procédé selon l'une quelconque des revendications précédentes, dans lequel un vide à un niveau d'environ 2-5 mbar abs. est produit et maintenu dans l'espace.

7. Procédé selon l'une quelconque des revendications précédentes, dans lequel le produit est un moulage de fibres de verre fait avec une résine polyester et la surface (10) à l'intérieur de l'espace est chauffée à une température comprise entre 80°C et 90°C.

8. Procédé selon l'une quelconque des revendications précédentes, dans lequel le produit est un moulage de fibres de verre avec un enduit gélifié extérieur, et dans lequel le matériau en feuille (18) est attaché à la surface (10) après que l'enduit gélifié a été détérioré et tout matériau physiquement endommagé a été retiré de la surface (10).

9. Procédé selon la revendication 8, dans lequel le traitement est achevé en remplaçant l'enduit gélifié retiré par un enduit gélifié frais.

10. Procédé selon l'une quelconque des revendications précédentes, dans lequel le produit est moulé à partir de plastiques renforcés par des fibres.

11. Procédé selon l'une quelconque des revendications précédentes, dans lequel le produit est une coque de bateau (10) moulée à partir de plastiques renforcés par des fibres.

12. Appareil pour le traitement d'un produit fait d'un matériau qui a été appliqué ou de matériaux qui ont été appliqués sur une surface sous une forme liquide et par la suite ont séché ou durci pour rendre le produit prêt à l'emploi, l'appareil comprenant une feuille imperméable (18), un moyen (20) pour attacher la feuille à une surface (10) du produit à traiter pour enfermer un espace entre la surface et la feuille, un moyen de chauffage (32) pour appliquer de la chaleur à l'intérieur de l'espace et un moyen (38) pour extraire continuellement les contenus gazeux de l'espace, **caractérisé en ce que** des moyens (30, 42) sont fournis pour maintenir la feuille (18) à distance de la surface pour permettre le gaz et la vapeur d'être extraits de toutes les zones de la surface sous la feuille.

13. Appareil selon la revendication 12, dans lequel le moyen d'extraction des contenus gazeux de l'espace est une pompe à vide (38) capable de travailler jusqu'à des pressions de 5 à 2 mbar abs.

14. Appareil selon la revendication 12 ou la revendication 13, dans lequel le moyen de chauffage (32) comporte un thermostat et un contrôleur de telle sorte qu'une température constante peut être maintenue à l'intérieur de l'espace.

15. Appareil selon l'une quelconque des revendications 12 à 14, dans lequel la feuille (18) a des propriétés d'isolation thermique.

16. Appareil selon l'une quelconque des revendications 12 à 15, comportant des feuilles (10b, 10c, 10d, 10e) de différentes tailles et différentes formes, de telle sorte que le procédé peut être exécuté sur des zones de produit de formes diverses.

17. Appareil selon l'une quelconque des revendications 12 à 16, dans lequel les bords de la feuille (18) sont d'un matériau qui formera un joint étanche à l'air ajusté contre la surface lorsqu'il sera attiré contre la surface par un vide.
